Europäisches Patentamt

(19) European Patent Office

Office européen des brevets

(11) Publication number : **0 392 623 B1**

(12) # EUROPEAN PATENT SPECIFICATION

(45) Date of publication of patent specification :
**24.06.92 Bulletin 92/26**

(21) Application number : **90200860.6**

(22) Date of filing : **09.04.90**

(51) Int. Cl.⁵ : **B65G 13/075,** B65G 13/12

(54) **Sloping roller conveyor.**

(30) Priority : **10.04.89 NL 8900878**

(43) Date of publication of application :
**17.10.90 Bulletin 90/42**

(45) Publication of the grant of the patent :
**24.06.92 Bulletin 92/26**

(84) Designated Contracting States :
**AT BE CH DE DK ES FR GB GR IT LI LU NL SE**

(56) References cited :
**FR-E- 29 768**
**NL-A- 8 400 320**

(73) Proprietor : **RAPISTAN VAN DER LANDE B.V.**
**Vanderlandelaan 2, Postbus 18**
**NL-5460 AA Veghel (NL)**

(72) Inventor : **van den Goor, Jakobus Marie**
**Boxhornpad 6**
**NL-5464 WG Eindhoven (NL)**

(74) Representative : **Vollebregt, Cornelis Jacobus**
**et al**
**Algemeen Octrooibureau P.O. Box 645**
**NL-5600 AP Eindhoven (NL)**

## Description

The invention relates to a sloping roller conveyor provided with a frame and with rollers journalled in said frame, said rollers being freely rotatable about at least substantially horizontally extending axes of rotation, whereby the arrangement is such that objects present on said rollers can move downwards under the influence of gravity, whilst along at least one side of the roller conveyor there is provided a guide for the objects extending along the roller conveyor, whilst at least a number of rollers of the roller conveyor is movable to and fro between a position in which the axes of rotation of the rollers in question extend perpendicularly to the guide, and a position in which the axes of rotation of the rollers enclose an acute angle with said guide, in such a manner that, when seen in the intended direction of movement of the objects, the ends of the rollers located furthest from the guide are arranged in front of the ends of the rollers located near the guide.

Such a device according to the preamble of claim 1 is disclosed in Dutch Patent Application 8400320. When such a device is used objects moving across the roller conveyor can be decelerated, by setting the inclination of the rollers such that the objects are moved towards the guide and are decelerated as a result of their contact with the guide. With the known device all rollers of the roller conveyor are adjusted simultaneously, so that all products are decelerated simultaneously, or start moving again simultaneously, as the case may be.

According to the invention the roller conveyor is provided with at least two sections of rollers, whereby the rollers in one section can be adjusted independently of the rollers in the other section.

When the construction according to the invention is used the movement of the objects to be conveyed by means of the roller conveyor can be influenced in the one part of the roller conveyor, independently of the influencing of the movement of the objects in another part of the roller conveyor. It is therefore possible to decelerate objects in the one section, for example, whilst in the other section objects are allowed to move along. By using such a construction an adequate control of the movement of the objects, also with regard to the mutual distance maintained between the objects, and/or the accumulation of objects on the sloping roller conveyor is possible. It is e.g. possible to first collect a number of objects on the section located furthest downstream and, when said objects cannot be discharged to a device further handling the objects, said objects can be brought to a standstill by pushing them against the guide, whilst in a similar manner a section located further downstream can be filled with objects, etc.

The invention will be further explained hereinafter, with reference to an embodiment of the construction according to the invention diagrammatically illustrated in the accompanying figures.

Figure 1 is a diagrammatic plan view of a few contiguous sections of a roller conveyor according to the invention.

Figure 2 is an elevational view corresponding with Figure 1, wherein the rollers are arranged in different positions in the various sections.

Figure 3 is a plan view corresponding with Figures 1 and 2, in which the rollers are illustrated in a further possible arrangement.

Figure 4 is a perspective view of the arrangement of rollers in the ends of two contiguous sections in a first position.

Figure 5 shows a view, corresponding with Figure 4, with the rollers in an altered position.

Figure 6 is a larger-scale diagrammatic cross-section of a roller conveyor according to the invention.

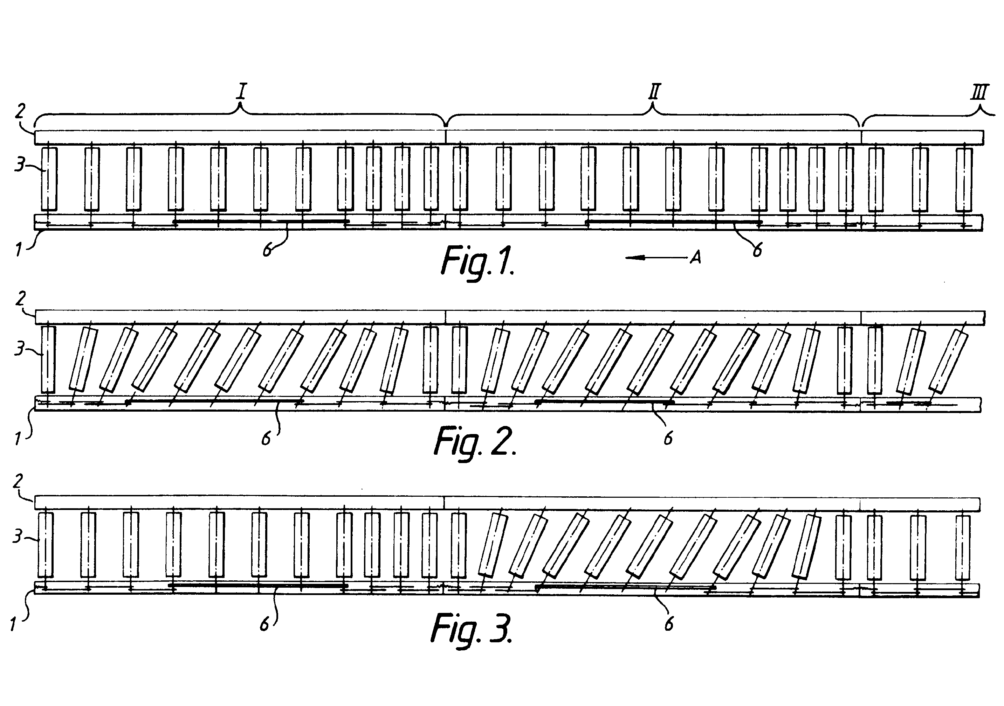

In Figure 1 there is arranged a part of a roller conveyor, which is built up of several contiguous sections, three of which being indicated by I - III in said Figure.

As is furthermore illustrated in said Figure the roller conveyor comprises a frame comprising two frame beams 1 and 2 extending in the longitudinal direction of the roller conveyor. In the frame there are journalled rollers 3, which are freely rotatable about axes of rotation extending at least substantially perpendicularly to the horizontal.

During normal operation the roller conveyor will take a sloping position, whereby for the explanation to be given hereinafter it is assumed that the section I is the section located furthest downstream, whilst the sections II, III located further upstream and any further sections (not shown) are respectively located at a higher level.

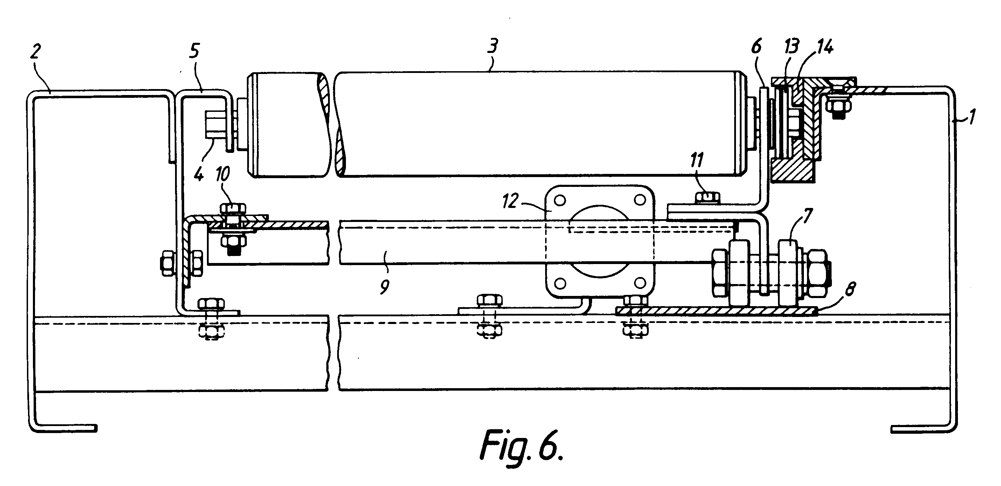

As is indicated in more detail in Figure 6 a roller 3 is supported with one end 4 in a beam 5 fixed to the frame beam 2, in such a manner that said end 4 can pivot relative to the frame beam 5, about a pivot pin extending perpendicularly to the longitudinal direction of the frame beams 1 and 2, but cannot move in the longitudinal direction of the roller conveyor relative to the frame beam 5.

The end of the roller 3 remote from the end 4 is supported in a similar manner on a supporting beam 6 extending parallel to the frame beam 1. Said supporting beam 6 is supported by means of a few pairs of rollers 7 arranged one behind the other in the longitudinal direction of the supporting beam 6 and being secured to said supporting beam, whereby the pairs of rollers 7 are movable on a plate 8 extending in the longitudinal direction of the frame and being supported by said frame.

The supporting beam 6 is connected with the beam 5 by means of a few coupling beams 9 extending under the rollers 3. The beams 9 are thereby pivotally coupled the beams 5 and 6 by means of bolts 10 and 11 respectively. The central axes of the bolts coupling the various beams 9 to the beams 5 and 6, which bolts form pivot pine for the beams 9, are located in the corner points of a parallellogram and extend perpendicularly to the longitudinal direction of the roller conveyor.

To one of the frame beams 9 there is connected the piston rod of a setting cylinder 12 diagrammatically illustrated in Figure 6, said setting cylinder itself being fixed to the frame. Thus the supporting beam 6 can be moved to and fro in the longitudinal direction of the roller conveyor by means of said setting cylinder. Wheels 13 are thereby fixed to the ends of the rollers 3 supported by the beam 6, for guiding the beam 6 and the rollers 3 supported by the beam 6, said wheels being accommodated in a track 14 secured to the frame, said track being shaped such that the wheels can move in the longitudinal direction of the track but cannot move vertically relative to the track.

As appears in particular from Figures 1 - 3 each section is provided with five rollers 3 directly supported by a supporting beam 6 in the illustrated embodiment. Furthermore there are provided three further rollers 3 in the section in question, both upstream and downstream of the rollers 3 supported by a beam 6. The three rollers arranged downstream in the section are thereby arranged spaced by about the same centre distance as the rollers supported by the beam 6, whereas the rollers arranged upstream in the section in question are arranged closer together, as will be apparent from Figure 1.

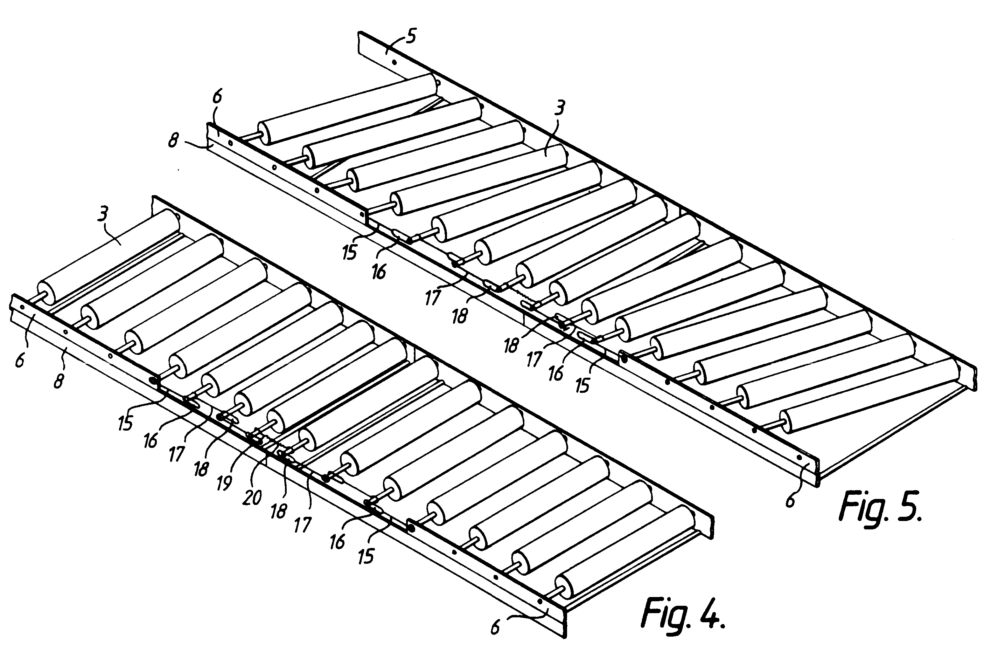

As is diagrammatically illustrated in Figures 4 and 5 the rollers arranged near the ends of the frame beam 6 are connected, with their ends remote from the beam 5, with the beam 6 by means of a coupling rod 15, which is fixed to the frame beam in question with one end and is provided at its other end with a slotted hole 16 accommodating the shaft of the nearby roller. In a similar manner the further rollers 3 belonging to the field and located upstream or downstream of the rod 6, as the case may be, are connected with each other or with the roller located nearest the end of the rod 6 by means of coupling rods 17, which are connected with a shaft of 4 roller at one end and at their other end are provided with a slotted hole 18 accommodating the shaft of the adjacent roller. The slotted ends of the coupling rods 15 and 17 respectively at the ends of the relevant coupling rods of the rollers located in a section downstream of a rod 6 and of the rollers located in a section upstream of a rod are thereby located remote from the supporting rod 6.

A spring 19, 20 respectively is coupled both to the roller 3 located at the upstream end of a section, and to the roller 3 located at the downstream end of the section, which spring attempts to keep the roller in question in a position in which the axis of rotation of the roller in question extends perpendicularly to the longitudinal direction of the roller conveyor.

The roller conveyor will furthermore be provided, at least at the side of the frame beam 2, with a guide (not shown) extending above the roller conveyor in the longitudinal direction of the roller conveyor.

As already said before, for operation the roller conveyor will be arranged in such a manner, that the roller conveyor slopes downwards, whereby the left-hand end of the roller conveyor, seen in Figure 1, will be the lowest point.

When the rollers thereby take the position illustrated in Figure 1, in which the axes of rotation of the rollers extend perpendicularly to the longitudinal direction of the roller conveyor, objects placed on the rollers can move downwards under the influence of gravity, whereby they are supported by the freely rotatable rollers 3.

From the position illustrated in Figure 1 the rollers in each section can be pivoted to the position illustrated in Figure 2, by moving the supporting beam 6 supporting the right-hand ends, seen in Figure 6, in its longitudinal direction by means of the setting cylinder 12. The rollers 3, which are directly supported in the supporting beam 6 with their ends, will thereby be brought into a position in which said rollers extend parallel to each other and at an acute angle to the longitudinal direction of the roller conveyor, in such a manner that, when seen in the intended direction of movement of the objects according to arrow A, the movable ends of the rollers, supported by the supporting beam 6, will be located in front of the ends of the rollers in question supported by the beam 5, said ends not being movable in the longitudinal direction of the roller conveyor.

With such a movement of the supporting beam 6 the roller 3 arranged directly upstream of the supporting beam in the section in question will first be carried along, after the supporting beam has been moved along the length of the slotted hole 16, which is provided in the coupling rod 15 connecting the roller in question with the supporting beam 6. Then the rod 6 must be moved along such a distance once again, before the next roller is carried along, etc.

In a similar manner the roller located directly downstream of the supporting beam 6 will not be moved before the beam 6 has been moved along a distance equal to the length of the slotted hole 16, which is provided in the coupling rod connecting the downstream end of the supporting beam 6 to the roller 3 directly contiguous thereto, and belonging to the same section, etc.

As will be apparent from Figure 2, as a result both the rollers located at the upstream end of a section and the rollers 3 located at the downstream end of the section are arranged in a more or less fan-shaped manner, so that, when the rollers move from a position in which the axes of rotation of the rollers extend perpendicularly to the longitudinal direction of the section to the position in which the axes of rotation enclose an acute angle with the longitudinal direction of the section, no undesirably large distances are created between the rollers of a section mutually and the rollers, located close together, of contiguous sections.

When the rollers in a section are thus arranged at an oblique angle relative to the longitudinal direction of the roller conveyor, the objects supported by the rollers in question will be pushed in the direction of the guide extending near the beam 5, as a result of which the objects are not only arranged in a row, one behind the other, but will also be decelerated or entirely stopped by their movement along the guide. Said deceleration or stopping, as the case may be, can be influenced by the magnitude of the angle at which the rollers are pivoted.

Furthermore it is possible to control the device in such a manner that all rollers in all sections are adjusted simultaneously, or that in certain selected sections the rollers assume a position with their axes of rotation extending perpendicularly to the longitudinal direction of the roller conveyor, and that in other sections the axes of rotation of the rollers enclose an acute angle with the longitudinal direction of the roller conveyor. Several applications of the device are thereby possible. During continuous use it is e.g. possible to move the rollers in the various sections to and fro intermittently, so that a constant intermittent deceleration of the objects is effected, as a result of which a gradual movement of the objects along the rollers can be effected, without the objects moving too fast thereby. Furthermore it may e.g. be effected that in one section the objects are brought to a standstill, whereas in (a) section(s) located upstream and/or downstream thereof the objects can still continue to move along the longitudinal direction of the roller conveyor. Thus, when using the invention according to the invention, several applications and uses are conceivable within the scope of the claims.

## Claims

1. A sloping roller conveyor provided with a frame and with rollers journalled in said frame, said rollers (3) being freely rotatable about at least substantially horizontally extending axes of rotation, whereby the arrangement is such that objects present on said rollers (3) can move downwards under the influence of gravity, whilst along at least one side of the roller conveyor there is provided a guide for the objects extending along the roller conveyor, whilst at least a number of rollers of the roller conveyor is movable to and fro between a position in which the axes of rotation of the rollers in question extend perpendicularly to the guide, and a position in which the axes of rotation of the rollers enclose an acute angle with said guide, in such a manner that, when seen in the intended direction of movement of the objects, the ends of the rollers located furthest from the guide are arranged in front of the ends (4) of the rollers (3) located near the guide, characterized in that said roller conveyor is provided with at least two sections of rollers, whereby the rollers (3) in one section can be adjusted independently of the rollers (3) in the other section.

2. A roller conveyor according to claim 1, characterized in that a number of rollers of at least one section is pivotally supported in corner points of a parallellogram, so that the axes of rotation of said rollers (3) are contstantly kept parallel to each other, whilst a roller (3) located upstream and/or downstream of said rollers is coupled to the former rollers by means of a connecting means (15-18) making possible a lost movement, in such a manner that the roller located upstream or downstream, as the case may be, is only moved from the position in which the axis of rotation of the roller in question extends perpendicularly to the guide, after the mutually connected rollers have already been pivoted about a certain angle, from the position in which their axes of rotation extend perpendicularly to the guide.

3. A roller conveyor according to claim 2, characterized in that upstream and/or downstream of the rollers joined in a parallellogram construction there are provided several further rollers (3), of which rollers each time two adjacent rollers are mutually connected by a connecting means (15-18) making possible a lost movement, in such a manner that the rollers are adjusted in succession.

4. A roller conveyor according to claim 2 or 3, characterized in that a connecting means is formed by a connecting rod (15, 17) provided between the ends of two successive rollers, said connecting rod (15, 17) at one end being connected with the one roller and at its other end being provided with a slotted hole (16, 18) accommodating the end of the other roller.

## Patentansprüche

1. Geneigter Rollenförderer mit einem Rahmen und mit im Rahmen gelagerten Rollen (3), die um mindestens im wesentlichen horizontal verlaufende Drehachsen frei drehbar sind, wobei die Anordnung derart ausgebildet ist, daß sich auf den Rollen (3) vorhandene Gegenstände unter dem Einfluß der Schwerkraft abwärtsbewegen können, wobei entlang mindestens einer Seite des Rollenförderers eine Führung für die sich entlang dem Rollenförderer erstrekkenden Gegenstände vorgesehen ist und wobei mindestens eine Reihe der Rollen des Rollenförderers zwischen einer Position, in der die Drehachsen der in Rede stehenden Rollen senkrecht zur Führung verlaufen, und einer Position, in der die Drehachsen der Rollen mit der Führung einen spitzen Winkel bilden, hin- und herbewegbar ist, und zwar derart, daß in der beabsichtigten Bewegungsrichtung der Gegenstände gesehen die Enden der Rollen, die am weitesten von der Führung entfernt angeordnet sind, vor den Enden (4) der Rollen (3), die nahe der Führung angeordnet sind, liegen, dadurch gekennzeichnet, daß der Rollenförderer mit mindestens zwei Sektionen von Rollen versehen ist, wobei die Rollen (3) in einer Sektion unabhängig von den Rollen (3) in der anderen Sektion eingestellt werden können.

2. Rollenförderer nach Anspruch 1, dadurch gekennzeichnet, daß eine Reihe von Rollen von mindestens einer Sektion schwenkbar in Eckpunkten eines Parallelogramms gelagert ist, so daß die Drehachsen der Rollen (3) in konstanter Weise parallel zueinander gehalten werden, während eine aufstromseitig und/oder abstromseitig der Rollen angeordnete Rolle (3) über eine ein Spiel ermöglichende Verbindungseinrichtung (15 - 18) mit den vorherigen Rollen derart verbunden ist, daß die aufstromseitig oder abstromseitig angeordnete Rolle nur aus der Position bewegt wird, in der sich die Drehachse der in Rede stehenden Rolle senkrecht zur Führung erstreckt, nachdem die miteinander verbundenen Rollen aus der Position, in der ihre Drehachsen senkrecht zur Führung verlaufen, bereits um einen bestimmten Winkel verschwenkt worden sind.

3. Rollenförderer nach Anspruch 2, dadurch gekennzeichnet, daß aufstromseitig und/oder abstromseitig der in einer Parallelogramm-Konstruktion verbundenen Rollen diverse weitere Rollen (3) vorgesehen sind, von denen jedesmal zwei benachbarte Rollen über eine ein Spiel ermöglichende Verbindungseinrichtung (15 - 18) derart miteinander verbunden werden, daß die Rollen nacheinander eingestellt werden.

4. Rollenförderer nach Anspruch 2 oder 3, dadurch gekennzeichnet, daß eine Verbindungseinrichtung durch einen zwischen den Enden von zwei aufeinander folgendenen Rollen vorgesehenen Verbindungsstab (15, 17) gebildet wird, welcher an einem Ende mit der einen Rolle verbunden und an seinem anderen Ende mit einem geschlitzten Loch (16, 18) versehen ist, das das Ende der anderen Rolle aufnimmt.

**Revendications**

1. Transporteur à rouleaux incliné équipé d'un cadre et de rouleaux tourillonnés dans ledit cadre, ledit rouleau (3) pouvant tourner librement autour d'axes de rotation au moins sensiblement horizontaux, l'agencement étant tel que des objets présents sur lesdits rouleaux (3) peuvent descendre sous l'action de la pesanteur, tandis que le long d'au moins un côté du transporteur à rouleaux, il est prévu un guide pour les objets, qui s'étend le long du transporteur à rouleaux, tandis qu'au moins un certain nombre de rouleaux du transporteur à rouleaux peuvent être déplacés en va-et-vient entre une position, dans laquelle les axes de rotation des rouleaux en question sont perpendiculaires au guide, et une position dans laquelle les axes de rotation des rouleaux font un angle aigu par rapport audit guide, de telle sorte que, lorsqu'on regarde dans la direction prévue de déplacement des objets, les extrémités des rouleaux les plus éloignés du guide sont disposées en vis-à-vis des extrémités (4) des rouleaux (3) situés à proximité du guide, caractérisé en ce que ledit transporteur à rouleaux comporte au moins deux sections de rouleaux, les rouleaux (3) d'une section pouvant être réglés indépendamment des rouleaux (3) de l'autre section.

2. Transporteur à rouleaux selon la revendication 1, caractérisé en ce qu'un certain nombre de rouleaux d'au moins une section sont supportés de manière à pouvoir pivoter au niveau de sommets d'un parallélogramme de sorte que les axes de rotation desdits rouleaux (3) sont maintenus en permanence parallèles entre eux, tandis qu'un rouleau (3) situé en amont et/ou en aval desdits rouleaux est couplé aux premiers rouleaux indiqués grâce à des moyens de liaison (15-18) permettant une course à vide, de telle sorte que le rouleau situé en amont ou en aval, selon le cas, est déplacé uniquement depuis la position dans laquelle l'axe de rotation du rouleau en question est perpendiculaire au guide, après que les rouleaux raccordés mutuellement ont déjà pivoté sur un certain angle, à partir de la position dans laquelle leurs axes de rotation sont perpendiculaires au guide.

3. Transporteur à rouleaux selon la revendication 2, caractérisé en ce qu'en amont et/ou en aval des rouleaux réunis pour former une structure en forme de parallélogramme, il est prévu plusieurs autres rouleaux (3), parmi lesquels deux rouleaux adjacents quelconques sont raccordés réciproquement par des moyens de liaison (15-18) permettant une course à vide, de sorte que les rouleaux sont réglés successivement.

4. Transporteur à rouleaux selon la revendication 2 ou 3, caractérisé en ce que des moyens de liaison sont formés par une barre de liaison (15,17) disposée entre les extrémités de deux rouleaux successifs, ladite barre de liaison (15,17) étant raccordée par une extrémité à un rouleau et comportant, à son autre extrémité, un trou en forme de fente (16,18) logeant l'extrémité de l'autre rouleau.

Fig.1.

Fig.2.

Fig. 3.

EP 0 392 623 B1

Fig. 5.

Fig. 4.

EP 0 392 623 B1

Fig.6.